# EUROPEAN PATENT APPLICATION

(11) **EP 3 896 130 A1**
(43) Date of publication of application: **20.10.2021**
(21) Application number: 20382313.3
(22) Date of filing: 17.04.2020
(51) Int. Cl.: C09D 7/61, C22C 38/04, B22F 1/00, C08K 3/08

(54) **METHOD FOR OBTAINING COLOURED METAL-CONTAINING POWDER, THE POWDER OBTAINED THEREOF AND ITS USE AS METALLIC PIGMENT**

(71) Applicant: Ferroglobe Innovation, S.L., 28046 Madrid (ES)
(72) Inventor: MíGUEZ NOVOA, José Manuel, 15142 Arteixo (A Coruña) (ES); VARELA MIRANDA, Gonzalo, 15142 Arteixo (A Coruña) (ES); DIÉGUEZ NOVOA, Joaquín, 15142 Arteixo (A Coruña) (ES); ORDÁS BADÍA, Ramón, 15142 Arteixo (A Coruña) (ES)
(74) Representative: Ungria López, Javier

(57) **Abstract**

The present invention relates to a method for producing a coloured metal-containing powder, which can be used as a metallic pigment, said method comprising: preparing a bulk metal-containing material in the form of powder (which acts as a particle substrate), which is a ferromanganese (FeMn) powder; and heating said material up to a temperature ranging from 100°C to 1000°C in a container, in the presence of oxygen. Preferably, the bulk powder is a refined FeMn powder. It is also an object of the invention the coloured metal-containing powder obtainable by means of the disclosed method, in the absence of surface modifiers, wherein it can have a blue, purple/violet and gold colour, or any intermediate tonality, depending on the metal oxide content. Said oxides are present forming an outer layer on the particles of the powder. The invention also refers to the use of the powder as a metallic pigment.

## Description

### FIELD OF THE INVENTION

The present invention falls within the scope of the Chemical field, and more specifically relates to new technologies for the manufacture of metal-containing powders having improved colour properties, which are used as metallic pigments. Said powder, as additive, can be used in a wide variety of areas, such as decorative metallic powder for ceramic/surfaces (for instance countertops for kitchens); metallic pigments for paints; additive for coatings, including automotive coatings, plastic coatings (ex. consumer electronics), coil coatings, can coatings, powder coatings, decorative coatings, among others; and additive for cosmetics.

### BACKGROUND OF THE INVENTION

Pigments are normally classified into two main families: organic pigments and inorganic pigments. The metallic pigments belong to this last category.

A pigment is a dyestuff, or a component having a metallic or iridescent appearance, being in the form of a powder (coloured, white or black), and insoluble, unlike the dyes themselves, in the solvents and the substrates. The term metallic pigment covers powders based on aluminum, magnesium, copper, iron (steel), bronze or micaceous derivatives, used as additives, in particular paints and inks.

In addition, it should be noted that the metal pigments known from the prior art are aluminium-based powders, magnesium, copper, iron (or steel), bronze even micaceous derivatives (Schleck R., Pigments, Encyclopedia of Chemical Technology, vol.17, 1982, p.7888). Ferroalloys are not part of this list.

The physical parameters that have an influence and determine the metallic appearance of the powder are: the average particle diameter, shape of the grain, distribution and orientation in the final formulation.

They generally have a particle size of between 5 and 25 microns and a form called flat-flake or straw and are subdivided into two types, according to their wetting behaviour in solvents:
- leafing pigments (or leafing) which remain on the surface of the formulation and are oriented parallel to the interfaces forming a dense metal layer which gives the medium a very high reflectivity and excellent protection; and
- non-film pigments that are oriented more or less parallel to the substrate, randomly and in the bottom layer of the preparation.

Pigments are used for colouring paint, ink, plastic, cosmetics, food and other materials. Most pigments used in manufacturing are dry colorants, usually ground into fine powder. This powder is added to a vehicle (or binder), a relatively neutral or colourless material that suspends the pigment and gives the paint its adhesion.

In WO2005/097915A2, Aurélie Fay proposed the used of silicon and silicon alloys with a layer of silicon oxide to obtain different colours depending on the thickness of that layer. However, the refraction index of the SiO₂ layer was similar to that of normal vehicles (or binders) so no coloured effect was found when processed. In the current invention, the difference in the refraction index between the metallic powders and the binder is enough to appreciate the colour.

Metallic pigments are mainly very sensitive to oxidation phenomena, accentuated by any acidity or alkalinity of the environment. The reactions governing these phenomena are generally inhibited by using oils, waxes, aqueous binders or shellac, which have the effect of physically isolating metals from ambient air and moisture. This addition constitutes an additional constraint for the use of these pigments. For example, patent GB1154933 proposes to coat the metallic powders (bronze, copper, zinc or aluminium) with silicates to protect the surface of the powders from tarnishing. Another example is US2010/0269733 A1, wherein it is described a method in which a platelet-shaped substrate is covered with oxide pigments (metallic effect pigment) and a surface modifier, consisting of an organometallic compound with at least one fluoroalkyl and/or fluoroaryl group.

In relation to coatings, US2017/0306159 A1 relates to a method to obtain coated PVD (Physical Vapor Deposition) particles with metal effect and very good dispersability, allowing for very high concentration suspensions. Despite the fact of the benefits of the process, it is clear that PVD is an expensive process. One example of coloured metal powder is disclosed in CN104312296, wherein a method for modifying the surface of metallic pigments is carried out by introducing hydrophobic components, with the aim of increasing the stability of metallic pigments and providing a self-cleaning effect. The five-step process starts from spherical copper gold powder having micron size, which is sieved and filtered for obtaining flaky powder; and then it is sequentially mixed with solvents and silane agents. The surface of the powder is thus modified by a coating of silicon dioxide and polytetrafluoroethylene.

Another example is disclosed in US2864719, wherein an improved copper-containing bronze powder is prepared in combination with an organic compound selected from a specific group consisting of water insoluble long chain aliphatic and alicyclic hydrocarbon acids containing from 8 to about 32 carbon atoms and a water-insoluble rosinamine.

In view of the foregoing documents, the present invention tries to solve the drawbacks detected in the field of the invention. One advantage of the current invention is that no surface modifiers are needed for obtaining the pigment, as the oxide layer giving the colour to the powder that can be used as pigment is part of the substrate or raw material after the treatment.

### DESCRIPTION OF THE INVENTION

The invention relates to a method for producing a (composite) coloured metal-containing powder, which can be used as a metallic pigment, said method comprising:
a) preparing a bulk metal-containing material in the form of powder (which acts as a particle substrate); wherein the bulk material is a ferromanganese (FeMn) powder; and
b) heating the bulk powder up to a temperature ranging from 100°C to 1000°C in a container, in the presence of oxygen, until an outer layer of manganese oxides and/or iron oxides is formed on the particles of the bulk material powder used as a particle substrate.

When a range of values is disclosed in the present text, it is considered that the lower and higher limits are included as part of the invention.

In a preferred case, said method consists in the above-commented steps, without the need of any further step or action.

Preparing the bulk metal-containing material in step a) must be understood as to obtain or select a raw material that can be used as starting material for obtaining the coloured metal-containing powder by heating in step b). This way, the bulk material having the properties disclosed above can be prepared by one of the following means:
a.1) by grinding or milling a raw material into powder having the intended properties, directly;
a.2) by grinding or milling a raw material into powder, and classifying the milled powder into fractions having the intended properties; or
a.3) classifying a raw material powder into fractions having the intended properties, directly (without grinding or milling).

The first alternative for preparing the raw material by milling or grinding the same is recommended when a small particle average size range is intended for the product, for instance higher than 0 and equal to or below 20 µm.

However, it is preferred the second alternative, i.e. milling or grinding a raw FeMn material and subsequently classifying the obtained powder for preparing a homogeneous fraction. Or even the third alternative: just classifying a raw material that already is in the form of powder into fractions.

In a preferred embodiment, the primary grinding or milling action in step a) is carried out by means of a roller mill. For further milling (d50 below 20 microns, for example) the preferred option is a jet mill.

Also in a preferred embodiment, the classification action in step a) is carried out by sieving or by air classification in the case of the smaller sizes, independently of the type of milling or grinding action. Any combination of these classification alternatives with the grinding and milling alternatives is feasible in the present invention.

Concerning the chemical composition of the raw material in step a), the bulk metal-containing material which acts as a particle substrate has any content of Fe and Mn in its composition. In a particular embodiment, the raw material may be a high Carbon FeMn (HC FeMn). However, it is preferably a refined ferromanganese (FeMn) powder (i.e. having a content of carbon lower than 2% and a content of manganese around 80%), because it has a lower content of carbon than the non-refined FeMn (for instance, the HC FeMn powder), and consequently a higher metallic shine and a higher aesthetic value. More preferably, said refined FeMn is a medium Carbon FeMn (MC FeMn) or a low Carbon FeMn (LC FeMn) having at least in the composition:
- Mn in an amount between 78-84% w/w of the total composition;
- Fe in an amount between 13-22% w/w of the total composition;
- Si in an amount equal or less than 1.5% w/w of the total composition;
- C in an amount equal or less than 1.5% w/w of the total composition;
- P in an amount equal or less than 0.250% w/w of the total composition; and
- S in an amount equal or less than 0.015% w/w of the total composition.

The following table 1 summarizes examples of preferred embodiments of the raw ferromanganese powder according to the chemical composition:

**Table 1. Preferred chemical compositions for the ferromanganese powder: high Carbon FeMn (HC FeMn), medium Carbon FeMn (MC FeMn), and low Carbon FeMn (LC FeMn)**

| **%** | | **Mn** | **Si** | **C** | **P** | **S** |
|---|---|---|---|---|---|---|
| HC FeMn (non-refined) | Max. | 80.0 | 1.5 | 8.0 | 0.250 | 0.015 |
| | Min. | 75.0 | - | 6.0 | - | 0.007 |
| | Preferred | 75.5 | 1.0 | 6.5 | 0.200 | 0.010 |
| MC FeMn (refined) | Max. | 83 | 1.5 | 1.5 | 0.250 | 0.015 |
| | Min. | 78 | - | - | - | - |
| | Preferred | 80 | 1.0 | 1.0 | 0.200 | 0.007 |
| LC FeMn (refined) | Max. | 83 | 1.5 | 0.5 | 0.250 | 0.015 |
| | Min. | 78 | - | - | - | - |
| | Preferred | 80 | 1.0 | 0.5 | 0.200 | 0.007 |

The powder of bulk material prepared in step a) preferably has an average particle size of the particle substrate lower than 2 mm, more preferably lower than 1 mm, and even more preferably lower than 450 µm. Other preferred average particle sizes are lower than 315 µm and lower than 250 µm (in all the cases, the average particle size is higher than 0). In another preferred embodiment, the bulk material can have a particle size higher than 0 and equal or lower than 20 µm. Measurements of the average particle size are carried out using a sieve for sizes higher than or equal to 45 microns, and using laser diffraction means for a lower size, for instance using a Malvern Hydro 2000.

Besides, the bulk material preferably has a homogeneous particle (average) size of the particle substrate. In the context of the present invention, "homogeneous" means that less than 10% by weight of the total sample has a size lower that the lower limit of the average particle range, and that less than 10% by weight of the total sample has a size higher that the higher limit of the average particle range. The higher the homogeneity of the size, the higher the uniformity of the colour obtained. Hence, after selection a) and before the heating step b), the powder of bulk material can preferably have an homogeneous average particle size range (i.e. fraction) between higher than 0 and 1 mm, wherein less than 10% by weight of the powder has a size lower that the lower limit of the average particle range, and that less than 10% by weight of the powder has a size higher that the higher limit of the average particle range. More preferably, the powder of bulk material prepared in step a) shows an homogenous distribution particle size range selected from the following fractions: 125-250 µm, 60-125 µm, 45-60 µm, 20-45 µm, from higher than 0 µm to 20 µm, and from higher than 0 µm to 10 µm. As shall be disclosed below, every one of these fractions may have a different application or use.

Different particle sizes of the prepared raw powder in step a) need different reaction times in the thermal or heating treatment of step b) for obtaining the intended coloured metal-containing powder. That is the reason why it is preferred to select and separate by classification in step a) different fractions of powder having homogeneous particle distribution sizes, in order to treat them separately and to have a more uniform starting material from the point of view of the average size. For instance, the smaller fractions reach the (uniformity of the) intended colours faster, that is to say in shorter periods of time; it is because said smaller fractions generally has a narrower range of particle size (higher homogeneity of the sample) when compared to higher fractions (higher dispersion of the particle size).

The raw ferromanganese powder is made of particles having any shape or morphology (before and after the preparation step). However, the particles preferably has an elongated shape (i.e. one dimension is greater than the other two), as can be a flake shape (flat-flake). This shape does not change due to the heating step b) and optimizes the aesthetic effect, due to a more effective reflection of light.

The raw, bulk ferromanganese material (and the corresponding powder prepared in step a)) originally has a silver metallic appearance, whose variations could also be already part of the range of the intended colours for the final coloured metal-containing powder, or it may be changed as a result of the claimed process, depending on the reaction conditions. It is because during the thermal treatment the surface of the powder is oxidized, thus resulting in a change of the colour of the bulk powder.

Regarding the heating step b), the higher the temperature, the lower time needed for reaching the same colour (see Example 5, Table 6). For instance, for a sample of raw FeMn powder having an average particle size of 120-250 microns, the golden colour is reached in 120 minutes when the temperature is of 275°C; however, it takes only 30 minutes at 350°C. The same applies for the purple/violet colour: it takes 615 minutes to reach said colour at 275°C, but only 60 minutes at 350°C.

Besides, it is observed that, at the same heating conditions (i.e. same temperature), a sample of raw powder having a bigger range of particle size (for instance, between 120-250 microns) needs more time for reaching a specific colour than a sample having a smaller range of particle size (for instance, between 20-45 microns; see Example 5, Table 5), wherein all the particles reach the same colour (homogeneity) faster. In all, the heating time needed for obtaining the material with any intended colour depends on the average particle size of the sample, as well as of the own temperature.

The heating step b) is preferably carried out at a temperature between 250°C and 500°C, including both limits.

In a preferred embodiment, the container in which the sieved material is heated up in step b) is a furnace, which can be any type of furnace having any type of heating means, such as inductive, resistive and gas furnaces. Preferably the furnace is selected from a group consisting of: batch furnace, continuous furnace, rotating furnace and still furnace. More preferably, it is selected between a rotating furnace and a batch furnace. A rotating furnace is more preferred, since the rotation of the powder allows achieving a more homogeneous heating on step b).

When a batch furnace is used, the raw powder to be treated is deposited in the form of a thin layer on a tray; it should be taken into account that a different coloured metallic powder is obtained depending on the thickness of said layer of bulk material deposited on the tray. That is the reason why the thickness of the layer of raw material that is deposited inside the container is important for the uniformity of the intended colour of the final product. Said thickness varies depending on the selected heating temperature and the selected heating time. Nonetheless, it is preferably a thickness of around 0.5 cm in order to obtain a more homogeneous colour.

The atmosphere inside the furnace during the heating step b) is an atmosphere containing oxygen, and is preferably selected from the group consisting of: air, air enriched with O₂, a mixture of N₂ and O₂ and pure oxygen.

It is a second objet of the present invention the coloured metal-containing powder obtainable by means of the process disclosed above, which can act as a metallic pigment, in the absence of surface modifiers for obtaining the powder. As a consequence of the heating step b) in the presence of oxygen, the obtained powder is made of composite particles, wherein an outer layer of manganese oxides and/or iron oxides is formed on the original ferromanganese substrate particles used as bulk (starting) material in the process described above. In essence, the particles have a modified surface as a result of the obtaining process. Said obtained powder has the same properties as those disclosed above for the bulk material in relation to particle size and morphology, however, a change in the original colour takes place as a result of a change in the chemical composition, i.e. the formation of oxides. The oxides forms an outer layer but at the same time said layer is embedded in the structure of the substrate or powder, that is to say, the outer layer of oxides is formed without the addition of extra components to the powder of bulk powder.

The outer layer of Mn/Fe oxides produces the colour, and the thickness of said layer of oxides (which is directly related with the content of oxygen, and therefore with the manganese and iron oxides content) that surrounds the particles produces different colours (gold, purple/violet, blue) having different tonalities. This effect is due to the thin film interference. Thin-film interference is a natural phenomenon in which the light waves reflected by the upper and lower boundaries of a thin film interfere with one another, either enhancing or reducing the reflected light, i.e. changing the final reflection. When the thickness of the film is an odd multiple of one quarter-wavelength of the light on it, the reflected waves from both surfaces interfere to cancel each other. Since the wave cannot be reflected, it is completely transmitted instead. When the thickness is a multiple of a half-wavelength of the light, the two reflected waves reinforce each other, increasing the reflection and reducing the transmission. Thus when white light, which consists of a range of wavelengths, is incident on the film, certain wavelengths (colours) are intensified while others are attenuated.

The X-ray diffraction pattern analysis of the powder shows that the changes of colour from the bulk material (particle substrate) to the final coloured metal-containing powder are due to the fact that the final structure of the powder has no crystalline oxides, just because they are not present at all, or because they are present in a very low percentage, or because the diffractions that they produce are shielded by the metal peaks. Actually, a layer made of oxides is formed in the outer surface, including Fe oxides and/or Mn oxides, having the formula (Mn₂₋ₓFeₓ)O₃. That is to say, the oxide content in the metallic original FeMn bulk powder prepared in step a) is very small (0.1-2.0% depending on the specific surface), and the increase of said content in the surface of the particles is the cause of the change of colour of the final powder: gold, with the lower oxide content, changes to violet when the amount of oxide content increases, and violet changes to blue when the oxide amount reaches the higher content of oxides. The smaller the particle, the higher the % content of the oxides with respect to the final total composition when compared with higher particle sizes, for the same conditions.

Therefore, the final coloured metal-containing powder has an outer layer surrounding the particles and embedded (anchored) in the core thereof, the oxide content being defined by the following formula: (Mn₂₋ₓFeₓ)O₃, wherein 0≤x≤2, since the oxides are amorphous oxides of the MnFeOₓ type. The content of oxygen in the final composition is preferably equal or lower than 27%, and it is more preferably comprised between 0.1% and 27% by weight of the total composition. Said content is concentrated in the surface of the grain powders (also named particles), causing the colour thereof.

This effect is also seen when the refractive index of the final powders are analysed through ATR(FTIR) spectroscopy. The refractive index varies with wavelength, and the refractive indices given in this invention are reported at 633 nm. Said refractive index is preferably comprised between 2.16 and 3.22, and more preferably between 2.16 and 2.91. It was observed that, the refractive index of the powder does not depend on the colour that defines said powder, confirming that the different colours of the powders are due to the different thicknesses of the oxide layer having a chemical formula (Mn₂₋ₓFeₓ)O₃, wherein 0≤x≤2. This range of refractive index is higher if the Fe content in the alloy is higher, too.

Needless to say that, one of the main advantages of the claimed process and powder is the variety of metallic effects that can be obtained: blue, purple/violet, gold and the original metallic colour (silver) of the bulk powder having a golden or a different silver tonality. Also a greyish/greenish colour may be obtained. A metallic powder having intermediate tonalities between the commented colours or any variation between them can be obtained (it needs to be taken into account that the scale of colours obtained is a gradient that varies depending on the conditions applied). One additional advantage of the obtained coloured metal-containing powder is that the golden powder that can be used as metallic pigment is obtained without using bronze, a compound that is only stable below 100°C and has a high instability and a high price. On the contrary, the powder disclosed in the present invention is cheaper and more stable (even up to 250°C).

The present invention also relates to the use of the coloured metal-containing powder defined above (that is to say, obtainable from the method also defined above) as a colouring additive, more specifically as a (metallic) pigment. In particular, the use of the obtained product may vary depending on the particle size of the final powder. For instance, a coloured powder having a particle size higher than 0 µm and equal or lower than 20 µm or higher than 0 µm and equal or lower than 10 µm is suitable as metallic pigment for paints, whereas a powder having a particle size between 125 µm and 250 µm is more suitable for ceramic surface, such as countertops for kitchens or the like.

The coloured metal-containing powder can be one of the followings, for giving powder metallic finish to products comprising the same:
- decorative metallic powder for ceramic products/surfaces, for instance countertops for kitchens;
- metallic pigment for paints;
- additive for coatings (powder coating compositions), including automotive coatings, plastic coatings (ex. consumer electronics), coil coatings, can coatings, powder coatings, decorative coatings, among others; and
- additive for cosmetics.

One of the main advantages of the disclosed powders when used as additive in coatings, paints and agglomerated surfaces, is that the refractive index is much higher than the solvent or binder commonly used for the same purpose. For example, the common refractive index of iron oxides and manganese oxides are in the range of 2.16-3.22 whilst water is 1.33 and epoxy is 1.58. The greater the difference between both, oxides and vehicles, the better it is appreciated the colours.

### FIGURES

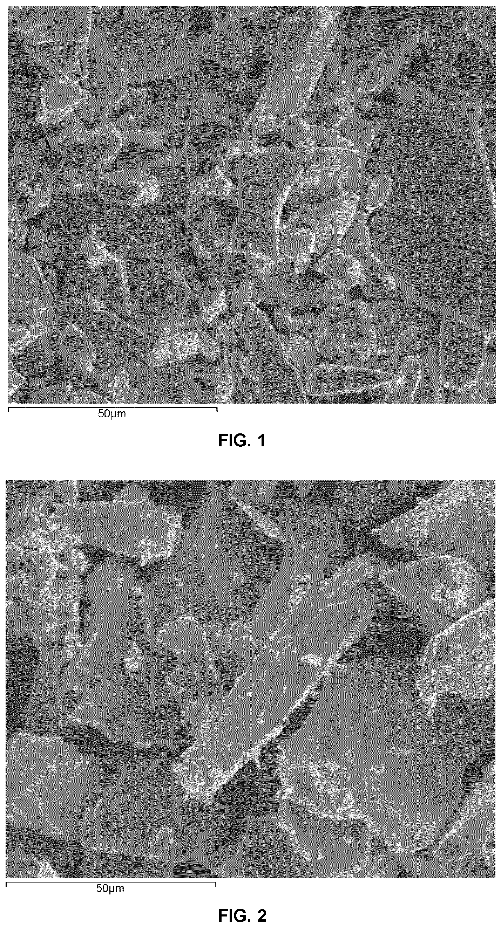

**Figure 1****:** Image taken from an electronic microscope of a FeMn bulk powder prepared in a) for carrying out the heating step b) according to the invention, wherein the flat shape of the particles can be clearly seen. The powder has a particle size range higher than 0 and lower than 20 microns.
**Figure 2****:** Image taken from an electronic microscope of a FeMn bulk powder prepared in a) for carrying out the heating step b) according to the invention, wherein the flat shape of the particles can be clearly seen. The powder has a particle size between 20-45 microns.

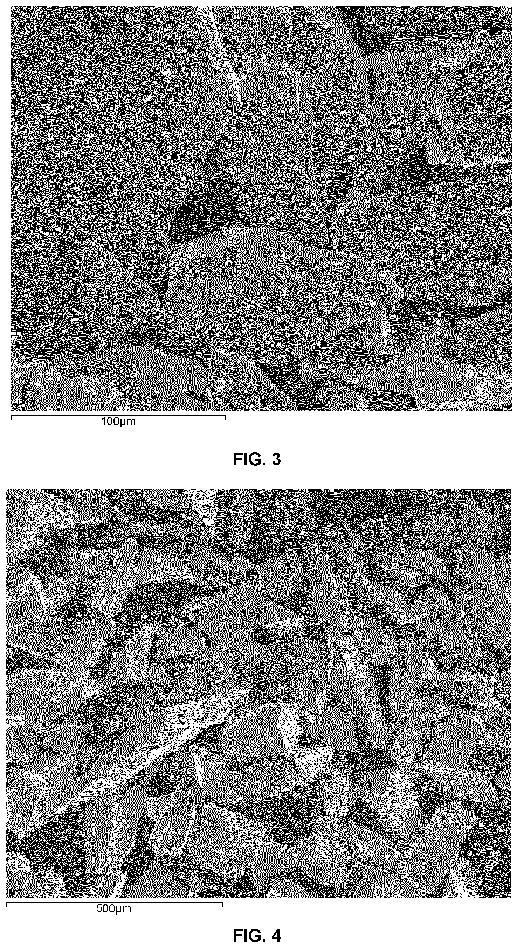

**Figure 3****:** Image taken from an electronic microscope of a FeMn bulk powder prepared in a) for carrying out the heating step b) according to the invention, wherein the flat shape of the particles can be clearly seen. The powder has a particle size between 45-60 microns.
**Figure 4****:** Image taken from an electronic microscope of a FeMn bulk powder prepared in a) for carrying out the heating step b) according to the invention, wherein the flat shape of the particles can be clearly seen. The powder has a particle size between 60-120 microns.
**Figure 5****:** Image taken from an electronic microscope of a FeMn bulk powder prepared in a) for carrying out the heating step b) according to the invention, wherein the flat shape of the particles can be clearly seen. The powder has a particle size between 125-250 microns.

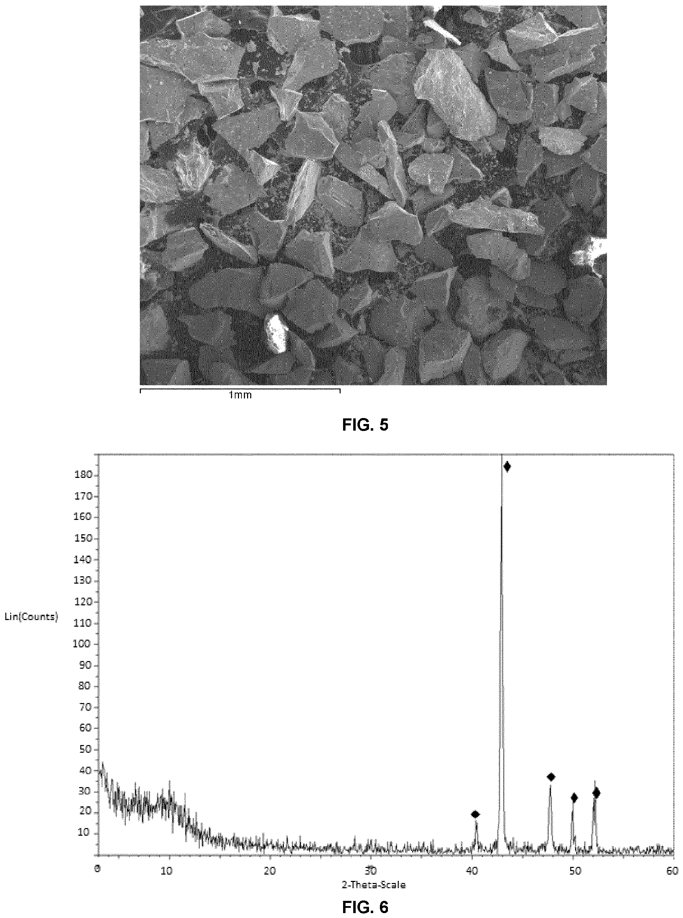

**Figure 6****:** XRD pattern of a sample of metal-containing powder that is a FeMn sample, having a blue colour. It can be clearly seen the peaks of Mn° (see black line), in this case Fe is in solid solution. Four different samples (FeMn having a particle size between 60-120 microns, without treatment; blue FeMn having a particle size between 60-120 microns; purple FeMn having a particle size between 60-120 microns; and gold FeMn having a particle size between 60-120 microns) characterized by the XRD shows similar results: no crystalline oxides are detected, or they appear in a low percentage so that the diffraction it produces is shielded by the metal peaks. In the case of the XRD of Figure 6, the spectrum of the claimed material is shown, and one can see that this is common spectrum of MnO₂; and the Mn as the only crystalline metallic species. Hence, the Fe is in solid solution within the Mn amorphous structure. No peaks of oxides can be seen.
**Figure 7****:** Spectra EDS of the surface of a grain of FeMn Blue powder obtained according to the Example 4 procedure. It is observed the peaks from left to right: peak of oxygen and secondary peak of Mn, forming a double peak; small peak of silicon; very intense peak of Mn; primary peak of Fe (Ka); and secondary peak of Fe (Kb).
**Figure 8****:** SEM image showing a cross section of a grain of coloured powder according to Example 4, i.e. a FeMn blue powder, after polishing. Analysis was carried out via EDS in different points of the grain to compare compositions: position of measurement points 7, 8, 9 and 10 is highlighted in the Figure.
**Figure 9****:** Spectra analysis of four points on the surface of the sample feMn blue powder of Example 4, after polishing.
**Figure 10****:** Diffraction index of the formed layer of oxides (Mn, Fe)Ox in coloured metal-containing powders to different wavelengths.

### EXAMPLES

### Example 1: Method for obtaining a golden metal-containing powder according to the invention

1 kg of refined LC FeMn bulk powder having an average particle size equal or below 250 microns is classified by sieving at 45-60 microns, and charged on a tray located inside a furnace in the form of a thin layer of around 0.5 cm. The heating step was carried out on air atmosphere, at 250 °C and during 3 hours. A golden coloured metal-containing powder was obtained.

### Example 2: Method for obtaining a golden metal-containing powder according to the invention

1 kg of refined LC FeMn bulk powder having an average particle size equal or below 250 microns is classified by sieving at 60-125 microns and is charged on a tray located inside a furnace in the form of a thin layer of around 0.5 cm. The heating step was carried out on air atmosphere, at 325 °C and during 15 minutes. A golden coloured metal-containing powder was obtained.

### Example 3: Method for obtaining a purple/violet metal-containing powder according to the invention

1 kg of refined LC FeMn bulk powder having an average particle size equal or below 250 microns is classified by sieving at 125-250 microns and is charged on a tray located inside a furnace in the form of a thin layer of around 0.5 cm. The heating step was carried out on air atmosphere, at 250 °C and during 5 hours. A purple coloured metal-containing powder was obtained.

### Example 4: Method for obtaining a blue metal-containing powder according to the invention

1 kg of refined LC FeMn bulk powder having an average particle size equal or below 250 microns is classified by sieving at 125-250 microns and is charged on a tray located inside a furnace in the form of a thin layer of around 0.5 cm. The heating step was carried out on air atmosphere, at 250°C and during 19 hours. A blue coloured metal-containing powder was obtained.

### Example 5: Charaterization of the coloured metal-containing powders obtained in Examples 1-4

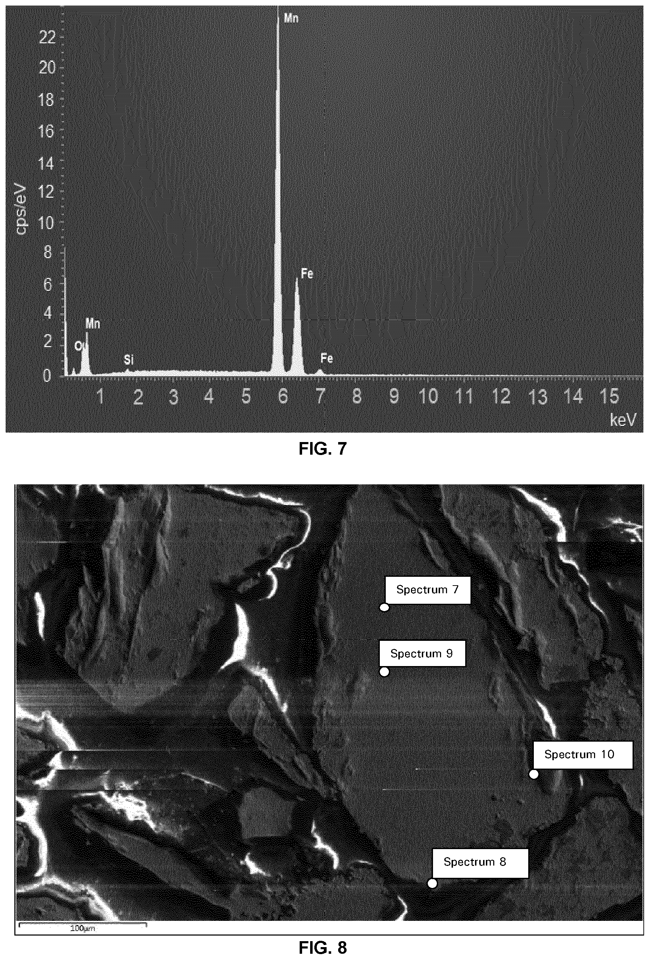

The golden, violet and blue powders, as well as a sample of the bulk, raw metallic powder that was used as starting material, were subjected to Optical microscopy by light reflected (OMLR) and characterised by EDS microanalysis, result being shown in the following table. This analysis is useful to show the trend, even though the absolute values could not be specified. An example of spectra EDS analysis is shown in Figure 7, wherein the surface of a FeMn blue powder is taken as an example.

**Table 3. EDS analysis of the powders prepared according to Examples 1-4, and compared with the composition of the FeMn raw material before starting the process**

| Wt% | FeMn | FeMn gold | FeMn violet | FeMn blue |
|---|---|---|---|---|
| Oxygen | Traces | 3.49±0.35 | 3.91±0.30 | 4.76±0.20 |
| Si° | 1.3±0.29 | 0.87±0.10 | 0.36±0.08 | 0.34±0.06 |
| Mn° | 79.42±0.29 | 76.71±0.41 | 76.34±0.41 | 74.69±0.27 |
| Fe° | 19.03±0.28 | 18.93±0.30 | 19.38±0.34 | 20.31±0.22 |
| (Mn₂₋ₓFeₓ)O₃, where 0≤x≤2* | <0.3 | 11.50 | 12.63 | 15.06 |

| | | | | |
|---|---|---|---|---|
| * *These values were obtained by stoichiometric calculation.* | | | | |

These results show that, for an average particle size of 60-120 microns, the amorphous oxide content can reach the 15% by weight of the total composition, increasing in the following order: Gold, Purple/Violet and Blue.

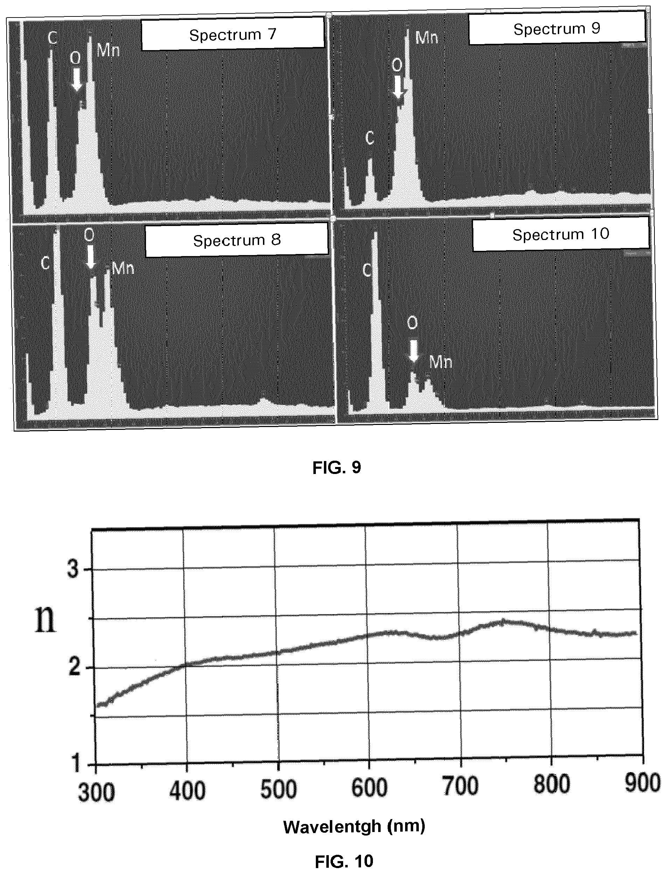

Figure 8 show a SEM-EDS image of the powder named FeMn blue colour, which corresponds to a cross section of one of the grains, analysed on the basis of four different points: Spectrum 7, Spectrum 8, Spectrum 9 and Spectrum 10. Figure 9 shows the results of the analysis in every point of analysis.

**Table 4. Semiquantitative EDS analysis of four points on the surface of a grain of FeMn blue powder after polishing**

| Wt% | Spectrum 7 | Spectrum 8 | Spectrum 9 | Spectrum 10 |
|---|---|---|---|---|
| Oxygen | Traces | 9.04±0.53 | 0.30±0.20 | 43.87±0.71 |
| Si° | 2.42±0.33 | 0.69±0.14 | 0.90±0.30 | 1.27±0.25 |
| Mn° | 79.12±0.93 | 71.02±0.53 | 80.0±0.90 | 42.41±0.64 |
| Fe° | 18.48±0.52 | 14.26±0.35 | 18.9±0.54 | 12.45±0.45 |

In Figure 9 it can be seen that the oxygen peak is not observed in spectra of point 7 and 9, however, it is very remarkable in points 8 and 10, which are near to the border of the grain. This result evidences that the Fe and/or Mn oxides are forming an outer layer, and that they are not present in the inner part of the particles of the powder. Depending on time, the thickness increases.

**Table 5. Effect of average particle size on heating time (T=350°C)**

| Colour | Average particle size | |
|---|---|---|
| | 120-250 microns | 20-45 microns |
| Blue | 240 min | 150 min |
| Gold | 30 min | 30 min |
| Violet/Purple | 60 min | 60 min |

**Table 6. Effect of temperature on heating time (average particle size=120-250 microns)**

| Colour | Average particle size | |
|---|---|---|
| | 275°C | 350°C |
| Blue | 240 min | NA |
| Gold | 30 min | 120 min |
| Violet/Purple | 60 min | 615 min |

In order to check the relationship between the oxygen content and the specific surface of the particles, they were measured both of them in three different size cuts (45-60 µm, 60-90 µm and 90-120 µm) for the golden colour material or powder, which was obtained in three different sizes: 45-60 µm, 60-90 µm and 90-120 µm.

**Table 7. Oxygen content (%) vs specific surface (m²/g), analysing three different sizes of golden powder**

| **Particle size** | **Oxygen content** (%) | **Specific Surface (m²/g)** |
|---|---|---|
| 45-60 µm | 0.67 | 0.24 |
| 60-90 µm | 0.53 | 0.12 |
| 90-120 µm | 0.52 | 0.06 |

According to these results, one can confirm that, for the same colour, the higher the specific surface area, the higher the oxygen content. And that said content is proportionate to the surface. That is the evidence that the metal oxides are only present the outer surface of the particles.

## Claims

1. A method for producing a composite coloured metal-containing powder, **characterised in that** said method comprises, in the absence of surface modifiers:
a) preparing a bulk metal-containing material in the form of powder which acts as a particle substrate; wherein the bulk material is a ferromanganese powder; and
b) heating the bulk powder up to a temperature ranging from 100°C to 1000°C in a container, in the presence of oxygen.

2. The method according to claim 1, wherein the bulk metal-containing material is prepared by means selected from the group consisting of:
a.1) by grinding or milling a raw metal-containing material into powder, directly;
a.2) by grinding or milling a raw metal-containing material into powder, and classifying the milled powder into fractions; and
a.3) classifying a raw metal-containing material powder into fractions, directly without grinding or milling.

3. The method according to any one of claims 1 or 2, wherein the bulk metal-containing material is selected from the group of ferromanganese materials consisting of: a high Carbon FeMn, a refined medium Carbon FeMn and a refined low Carbon FeMn.

4. The method according to claim 3, wherein the bulk metal-containing material is a refined medium Carbon FeMn or a refined low Carbon FeMn comprising at least in the composition:
- Mn in an amount between 78-84% w/w of the total composition;
- Fe in an amount between 13-22% w/w of the total composition;
- Si in an amount equal or less than 1.5% w/w of the total composition;
- C in an amount equal or less than 1.5% w/w of the total composition;
- P in an amount equal or less than 0.250% w/w of the total composition; and
- S in an amount equal or less than 0.015% w/w of the total composition.

5. The method according to any one of claims 1 to 4, wherein the powder of bulk metal-containing material prepared in step a) has an average particle size lower than 2 mm.

6. The method according to any one of claims 1 to 5, wherein the powder of bulk metal-containing material prepared in step a) has any fraction or range of particle size below 1 mm and shows an homogeneous average particle size, wherein less than 10% by weight of the powder has a size lower that the lower limit of the average particle range, and less than 10% by weight of the powder has a size higher that the higher limit of the average particle range.

7. The method according to claim 6, wherein the powder of bulk metal-containing material prepared in step a) has an homogeneous average particle size selected from the group of fractions consisting of: 125-250 µm, 60-125 µm, 45-60 µm, 20-45 µm, from higher than 0 µm to 20 µm, and from higher than 0 µm to 10 µm, wherein less than 10% by weight of the powder has a size lower that the lower limit of the average particle range, and that less than 10% by weight of the powder has a size higher that the higher limit of the average particle range.

8. The method according to any one of claims 1 to 7, wherein the bulk metal-containing powder is made of particles having a flake shape.

9. The method according to any one of claims 1 to 8, wherein the heating step b) is carried out in the presence of an atmosphere containing oxygen selected from the group consisting of: air, air enriched with O₂, a mixture of N₂ and O₂ and pure oxygen.

10. A coloured metal-containing powder obtainable by means of the method disclosed in any one of the preceding claims, **characterised in that** said powder is made of composite particles having an outer layer of amorphous manganese oxides and/or iron oxides of the MnFeOₓ type surrounding the surface thereof, the oxide content being defined by the following formula: (Mn₂₋ₓFeₓ)O₃, wherein 0≤x≤2.

11. The coloured metal-containing powder according to claim 10, having a content of oxygen equal or lower than 27% by weight of the total composition of the powder.

12. The coloured metal-containing powder according to any one of claims 10 or 11, wherein the powder has a refractive index comprised between 2.16 and 3.22.

13. Use of the coloured metal-containing powder defined in any one of claims 10 to 12, as a colouring additive.

14. The use of the coloured metal-containing powder according to claim 13, as a metallic pigment.

15. The use of the coloured metal-containing powder according to any one of claims 13 or 14, as an additive for one of the products selected from the group consisting of: ceramic products, ceramic surfaces, paints, coatings, plastics, printing materials and cosmetics.

## Amended claims

### Amended claims in accordance with Rule 137(2) EPC.

1. A method for producing a composite coloured metal-containing powder, **characterised in that** said method comprises, in the absence of surface modifiers:
a) preparing a bulk metal-containing material in the form of powder which acts as a particle substrate by means selected from the group consisting of:
a.1) grinding or milling a raw metal-containing material into powder, directly;
a.2) grinding or milling a raw metal-containing material into powder, and classifying the milled powder into fractions; and
a.3) classifying a raw metal-containing material powder into fractions, directly without grinding or milling;
wherein the bulk metal-containing material is a ferromanganese powder selected from the group consisting of: a high Carbon FeMn, a refined medium Carbon FeMn and a refined low Carbon FeMn; having a flake shape and an homogeneous average particle size selected from the group of fractions consisting of: 125-250 µm, 60-125 µm, 45-60 µm, 20-45 µm, from higher than 0 µm to 20 µm, and from higher than 0 µm to 10 µm, wherein less than 10% by weight of the powder has a size lower that the lower limit of the average particle range, and that less than 10% by weight of the powder has a size higher that the higher limit of the average particle range; and
b) heating the bulk metal-containing powder up to a temperature ranging from 100°C to 1000°C in a rotating furnace, in the presence of oxygen during a heating time needed for obtaining the metal-containing powder having one colour selected from the group consisting of: any intermediate tonality between the original colour of the bulk metal-containing powder and gold; gold, violet, blue, and any intermediate tonality between said colours; wherein the heating time is inversely related to the temperature and directly related to the average particle size of the bulk powder.

2. The method according to claim 1, wherein the bulk metal-containing material is a refined medium Carbon FeMn or a refined low Carbon FeMn comprising at least in the composition:
- Mn in an amount between 78-84% w/w of the total composition;
- Fe in an amount between 13-22% w/w of the total composition;
- Si in an amount equal or less than 1.5% w/w of the total composition;
- C in an amount equal or less than 1.5% w/w of the total composition;
- P in an amount equal or less than 0.250% w/w of the total composition; and
- S in an amount equal or less than 0.015% w/w of the total composition.

3. The method according to any one of claims 1 or 2, wherein the heating step b) is carried out in the presence of an atmosphere containing oxygen selected from the group consisting of: air, air enriched with O₂, a mixture of N₂ and O₂ and pure oxygen.

4. A coloured metal-containing powder obtainable by means of the method disclosed in any one of the preceding claims, **characterised in that** said powder is made of composite flake-shaped particles having an outer layer of amorphous manganese oxides and/or iron oxides of the MnFeOₓtype surrounding the surface thereof, the oxide content being defined by the following formula: (Mn₂₋ₓFeₓ)O₃, wherein 0≤x≤2.

5. The coloured metal-containing powder according to claim 4, having a content of oxygen equal or lower than 27% by weight of the total composition of the powder.

6. The coloured metal-containing powder according to any one of claims 4 or 5, wherein the powder has a refractive index comprised between 2.16 and 3.22.

7. Use of the coloured metal-containing powder defined in any one of claims 4 to 6, as a colouring additive.

8. The use of the coloured metal-containing powder according to claim 7, wherein the colouring additive is a metallic pigment.

9. The use of the coloured metal-containing powder according to claim 7, as a colouring additive for one of the products selected from the group consisting of: ceramic products, ceramic surfaces, paints, coatings, plastics, printing materials and cosmetics.
